# EUROPEAN PATENT APPLICATION

(11) **EP 4 823 097 A1**
(43) Date of publication of application: **14.10.2026**
(21) Application number: 24899785.0
(22) Date of filing: 02.12.2024
(51) Int. Cl.: H04N 21/2187, H04N 21/431, H04N 21/4788, H04N 21/482, H04N 21/488

(54) **LIVE-STREAMING INTERACTION METHOD AND APPARATUS, AND DEVICE AND STORAGE MEDIUM**

(30) Priority: 04.12.2023 CN 202311649960
(71) Applicant: Beijing Zitiao Network Technology Co., Ltd., Beijing 100190 (CN)
(72) Inventor: WANG, Yu, Beijing 100028 (CN); LI, Yichen, Beijing 100028 (CN); ZHANG, Xin, Beijing 100028 (CN); WANG, Haiqian, Beijing 100028 (CN); CHEN, Cheng, Beijing 100028 (CN); MIAO, Zhibin, Beijing 100028 (CN)
(74) Representative: Marks & Clerk LLP
(86) International application number: PCT/CN2024/136243
(87) International publication number: WO 2025/119146

(57) **Abstract**

Embodiments of the present disclosure relate to a method, an apparatus, a device, and a storage medium for live-streaming interaction. The method proposed here includes: presenting, in a live streaming interface of a livestream, a dynamic effect corresponding to a target virtual resource based on a target trigger operation for the target virtual resource, the target virtual resource being associated with an interaction event that the livestream participates in; and presenting prompt information in association with the dynamic effect, the prompt information being used to indicate a contribution degree of the target trigger operation to an interaction state of the livestream in the interaction event. Based on the above method, the embodiments of the present disclosure may help a user more intuitively perceive the contribution degree of the trigger operation of the virtual resource to the participation of the corresponding livestream in the interaction event.

## Description

The present application claims priority to Chinese Patent Application No. 202311649960.6, filed on December 04, 2023, and entitled "METHOD, APPARATUS, DEVICE AND STORAGE MEDIUM FOR LIVE STREAMING INTERACTION ", which is hereby incorporated by reference in its entirety.

### TECHNICAL FIELD

Example embodiments of the present disclosure generally relate to the field of computers, and in particular, to a method, an apparatus, a device, and a computer-readable storage medium for live streaming interaction.

### BACKGROUND

With the development of computer technologies, the Internet has become an important source for people to obtain various contents. A live streaming technology that utilizes the Internet and streaming media technologies to stream contents is developing rapidly. People may engage in multiple types of interactions through the livestream and may obtain rich types of information through the livestream.

### SUMMARY

In a first aspect of the present disclosure, a method for live-streaming interaction is provided. The method includes: presenting, in a live streaming interface of a livestream, a dynamic effect corresponding to a target virtual resource based on a target trigger operation for the target virtual resource, the target virtual resource being associated with an interaction event that the livestream participates in; and presenting prompt information in association with the dynamic effect, the prompt information being used to indicate a contribution degree of the target trigger operation to an interaction state of the livestream in the interaction event.

In a second aspect of the present disclosure, an apparatus for live-streaming interaction is provided. The apparatus includes: a dynamic effect presentation module configured to present, in a live streaming interface of a livestream, a dynamic effect corresponding to a target virtual resource based on a target trigger operation for the target virtual resource, the target virtual resource being associated with an interaction event that the livestream participates in; and a prompt presentation module configured to present prompt information in association with the dynamic effect, the prompt information being used to indicate a contribution degree of the target trigger operation to an interaction state of the livestream in the interaction event.

In a third aspect of the present disclosure, an electronic device is provided. The device includes at least one processing unit; and at least one memory, the at least one memory being coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

It should be understood that the content described in the content part of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of the embodiments of the present disclosure will become more apparent in combination with the drawings and with reference to the following detailed description. In the drawings, the same or similar reference numerals refer to the same or similar elements, where:
Fig. 1 shows a schematic diagram of an example environment in which the embodiments according to the present disclosure may be implemented;
Fig. 2A to Fig. 2C show example interfaces according to some embodiments of the present disclosure;
Fig. 3 shows a flowchart of an example process for live streaming interaction according to some embodiments of the present disclosure;
Fig. 4 shows a schematic structural block diagram of an apparatus for live streaming interaction according to some embodiments of the present disclosure; and
Fig. 5 shows a block diagram of an electronic device capable of implementing multiple embodiments of the present disclosure.

### DETAILED DESCRIPTION OF EMBODIMENTS

The embodiments of the present disclosure are described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for example purposes and are not intended to limit the protection scope of the present disclosure.

It should be noted that the titles of any section/subsection provided herein are not restrictive. Various embodiments are described throughout this disclosure, and any type of embodiments may be included under any section/subsection. In addition, the embodiments described in any section/subsection may be combined with any other embodiments described in the same section/subsection and/or different sections/subsections in any manner.

In the description of the embodiments of the present disclosure, the term "include" and similar terms should be understood as open-ended inclusions, that is, "include but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition, and/or data usage. These aspects all comply with corresponding laws, regulations, and related provisions. In the embodiments of the present disclosure, the collection, acquisition, processing, machining, forwarding, and usage of all data are performed on the premise that a user is aware of and confirms such actions. Accordingly, when implementing the embodiments of the present disclosure, the user should be informed of the type, usage range, usage scenarios, etc., of data or information that may be involved, and the authorization of the user should be obtained, through proper means according to relevant laws and regulations. The specific means of informing and/or authorizing may vary according to the actual situation and application scenarios, and the scope of the present disclosure is not limited in this regard.

If the solutions in this specification and the embodiments involve personal information processing, the processing is performed on the premise that there is a legal basis (for example, the consent of the personal information subject is obtained, or it is necessary for the performance of a contract, etc.), and the processing is performed only within the scope of provisions or agreements. If the user refuses to process personal information other than the necessary information required for a basic function, it does not affect the user's use of the basic function.

As introduced with reference to the above, a live streaming has become an important form of Internet interaction. For example, people may initiate the live streaming and become a streamer of a livestream. Alternatively, people may also join other livestreams to acquire corresponding live streaming contents.

In the process of the live streaming, for example, the user may boost the streamer participate in a specific interaction event (for example, a live streaming competition, etc.) by sending a virtual resource (for example, a virtual gift). However, it is difficult for the user to perceive a boosting degree of the user's interaction operation to the live streaming.

In view of this, the embodiments of the present disclosure provide a solution for live streaming interaction. According to the solution, presenting, based on a target trigger operation for a target virtual resource, a dynamic effect corresponding to the target virtual resource in a live streaming interface of a livestream, the target virtual resource being associated with an interaction event that the livestream participates in; and presenting, in association with the dynamic effect, prompt information used to indicate a contribution degree of the target trigger operation to an interaction state of the livestream in the interaction event.

Based on the above method, the embodiments of the present disclosure may help the user more intuitively perceive the contribution degree of the trigger operation of the virtual resource to the interaction event that the livestream participates in.

Various example implementations of the solution are described in detail below with further reference to the drawings.

### Example Environment

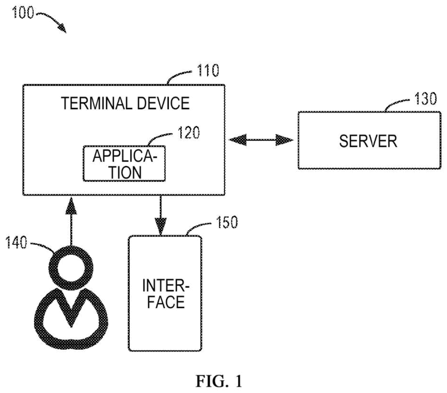

Fig. 1 shows a schematic diagram of an example environment 100 in which the embodiments of the present disclosure may be implemented. As shown in Fig. 1, the example environment 100 may include a terminal device 110.

In the example environment 100, the terminal device 110 may run an application 120 for providing and viewing media contents. The application 120 may be any suitable type of application for providing and viewing media contents, examples of which may include but are not limited to an online video application and a live streaming application. A user 140 may interact with the application 120 via the terminal device 110 and/or its attached devices. The user 140 may be, for example, a user (also referred to as a streamer) who provides live streaming contents and a user (also referred to as an audience) who views live streaming.

In the environment 100 of Fig. 1, if the application 120 is active, the terminal device 110 may present a live streaming interface 150 through the application 120.

In some embodiments, the terminal device 110 communicates with a server 130 to implement the provision of the services of the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the above, including the accessories and peripherals of these devices or any combination thereof. In some embodiments, the terminal device 110 may also support any type of user-specific interface (such as a "wearable" circuit, etc.).

The server 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide backend services for the application 120 supporting virtual scenes in the terminal device 110.

A communication connection may be established between the server 130 and the terminal device 110. The communication connection may be established in a wired or wireless manner. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the terminal device 110 may implement signaling interaction through the communication connection therebetween.

It should be understood that the structures and functions of the various elements in the environment 100 are described for example purposes only, without suggesting any limitation on the scope of the present disclosure.

Some example embodiments of the present disclosure are described below with continued reference to the drawings.

### Example Interface

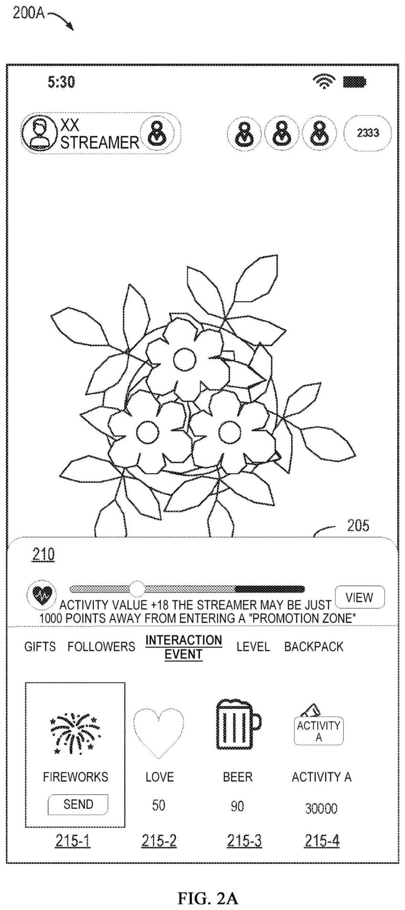

Some example embodiments of the present disclosure are described below with continued reference to the drawings. Fig. 2A shows an example interface 200A according to some embodiments of the present disclosure, which may be provided, for example, by the terminal device 110 associated with the user 140 (for example, an audience user in a livestream) in a livestream, and is also referred to as a live streaming interface.

As shown in Fig. 2A, the terminal device 110 may display a resource panel 205 in the interface 200A. The resource panel 205 may display a group of virtual resources associated with the interaction event that the livestream participates in. Such a group of virtual resources may include one or more virtual resources, for example, a virtual resource 215-1, a virtual resource 215-2, a virtual resource 215-3, and a virtual resource 215-4 (individually or collectively referred to as virtual resources 215).

In some embodiments, the interaction event that the livestream participates in may be various types of activity events that the livestream participates in. As an example, such an interaction event may include a live streaming competition event. For example, multiple livestreams may participate in such an activity event, and a winner of the activity event may be determined based on the interaction conditions of respective livestreams.

In some embodiments, such a group of virtual resources 215 presented by the resource panel 205 may be specific to the interaction event. For example, only the live streaming interface of the livestream that joins the interaction event presents the corresponding group of virtual resources 215. As an example, such a virtual resources 215 may include, for example, an appropriate resource such as a virtual gift, a virtual prop, and an interactive expression.

In some embodiments, the terminal device 110 may evoke the resource panel 205 based on, for example, an appropriate operation of the user in the live streaming interface. For example, the terminal device 110 may trigger the presentation of the resource panel by opening a gift panel and switching to a navigation bar corresponding to the interaction event.

In yet some embodiments, the terminal device 110 may also present a viewing interface of the interaction event. For example, the user may view the viewing interface by clicking on a preset entry in the live streaming interface of the livestream. The viewing interface may, for example, describe the interaction event and present the state of the livestream in the interaction event.

Further, the terminal device 110 may present a resource panel 210 in the live streaming interface 200A based on a preset operation for an interaction entry in the viewing interface. For example, the viewing interface may provide a boosting entry for boosting the current streamer, and the terminal device 110 may display the resource panel 210 in the live streaming interface 205 based on the user's selection for the boosting entry.

In some embodiments, as shown in Fig. 2A, the resource panel 205 may include a target region 210, which may be used to indicate a state of the livestream in the interaction event.

As an example, as shown in Fig. 2A, the target region 210 may indicate the state of the livestream in the interaction event through text, for example, "the streamer may be just 1000 points away from entering a "promotion zone"."

As another example, the target region 210 may also indicate the state of the livestream in the interaction event through a progress bar. For example, different display styles in the progress bar may correspond to the "promotion zone" and an "elimination zone" of the interaction event. Accordingly, the terminal device 110 may display an identification corresponding to the livestream in a corresponding area of the progress bar to, for example, indicate that the current livestream is in the "elimination zone" of the interaction event.

As an example, in response to the livestream being in the "elimination zone" of the interaction event, the terminal device 110 may display, for example, an interaction value required for the livestream to become a winner of the interaction event (for example, enter the "promotion zone").

Such an interaction value may be increased based on, for example, an interaction operation in the livestream. As an example, an audience user may increase the corresponding interaction value for the livestream by, for example, a trigger operation for the virtual resource.

As an example, in response to the livestream being in the "promotion zone" of the interaction event, the terminal device 110 may display, for example, an interaction value gap between the livestream and another livestream that participates in the interaction event. For example, the terminal device 110 may display that "the streamer is 100 points away from surpassing the previous rank ".

In some embodiments, the target region 210 may further include, for example, an access entry (for example, a "viewing" button) for accessing a viewing page of the interaction event. After receiving the selection for the access entry, the terminal device 110 may present, for example, an activity page of the interaction event.

In some embodiments, the terminal device 110 may also receive the user's selection for the virtual resource (for example, the virtual resource 215-1). Accordingly, the terminal device 110 may display, in the target region 210, an expected contribution degree of the selected virtual resource to an interaction state of the livestream in the interaction event.

In the present disclosure, the "interaction state" may be used to represent a corresponding state of the livestream in the interaction event, examples of which may include but are not limited to an interaction value, a ranking, a promotion state, and so on. The "contribution degree" may indicate a change in the "interaction state" caused by the trigger operation of the virtual resource.

For example, in response to the user selecting the virtual resource 215-1, the terminal device 110 may display "interaction value +18" in the target region 210 to indicate the expected contribution degree of the virtual resource 215-1 to the livestream in the interaction event, although the virtual resource 215-1 has not been triggered at this time.

In this way, the embodiments of the present disclosure may help the user more intuitively perceive the state of the livestream in the interaction event, and may perceive the expected contribution degree of triggering the virtual resource to the interaction state of the livestream through a preview of the virtual resource.

In some embodiments, the terminal device 110 may receive the user's trigger operation for the virtual resource 215-1 (for example, a click on the "sending" button).

In some embodiments, in response to the contribution degree of the virtual resource 215-1 to the livestream being less than a threshold, the terminal device 110 may, for example, keep displaying the resource panel 205, and may indicate the contribution degree of the trigger of the virtual resource 215-1 to the interaction state of the livestream in the interaction event through the target region 210.

For example, the terminal device 110 may update the position of the livestream in the progress bar based on a change in the interaction value caused by the virtual resource 215-1. Alternatively, the terminal device 110 may also display a change value of the interaction value caused by the virtual resource 215-1.

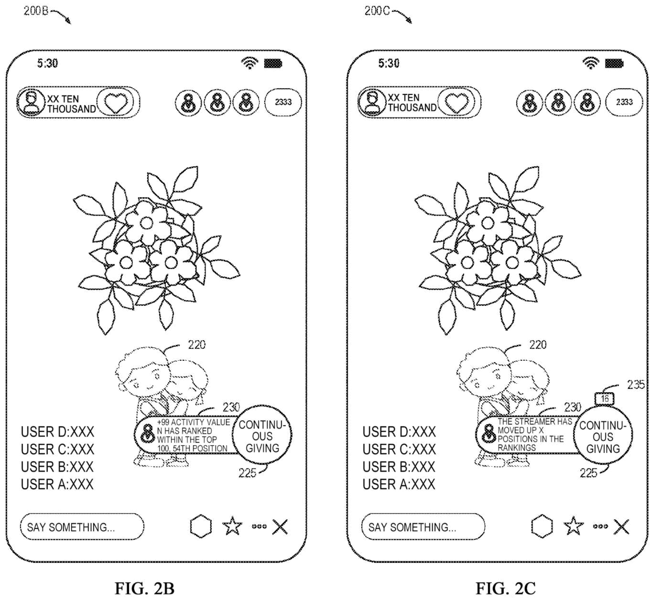

In yet some embodiments, the terminal device 110 may also present, for example, a dynamic effect corresponding to the triggered virtual resource 215-1 in the live streaming interface. Illustratively, as shown in Fig. 2B, the terminal device 110 may display a dynamic effect 220 corresponding to the virtual resource 215-1 in the interface 200B.

In some embodiments, in response to the contribution degree of the virtual resource 215-1 to the livestream reaching the threshold, the terminal device 110 may, for example, stop displaying the resource panel 210 and display the dynamic effect 220 as shown in Fig. 2B.

In some embodiments, the terminal device 110 may also present prompt information 230 in association with the dynamic effect 220. Such prompt information may be used to indicate the contribution degree of the target trigger operation to the interaction state of the livestream in the interaction event.

As shown in Fig. 2B, the prompt information 235 may represent the contribution degree of the trigger operation of the virtual resource 215-1, for example, "+99 activity value". Additionally, the prompt information 235 may further indicate, for example, the state of the livestream in the interaction event, for example, the current ranking of the livestream in the interaction event.

Based on this way, the embodiments of the present disclosure may help the user more intuitively perceive the contribution of the trigger of the virtual resource to the interaction state of the livestream in the interaction event.

In yet some embodiments, the terminal device 110 may also display a trigger control 225 in association with the dynamic effect 220. The trigger control 225 may be used, for example, to receive at least one additional trigger operation for the virtual resource 215-1. As an example, the user may continue to send or continuously send the virtual resource to the livestream by clicking on the trigger control 225, without opening the resource panel.

In some embodiments, the terminal device 110 may also update the prompt information 230 based on the contribution degree of the received additional trigger operation to the interaction state of the livestream in the interaction event. As an example, Fig. 2C shows the updated prompt information 230. For example, the updated prompt information 230 may indicate that "the streamer has moved up X positions in the rankings ".

In some embodiments, the updated prompt information 230 may indicate, for example, the contribution degree corresponding to the received additional trigger operation. For example, the prompt information may display the corresponding contribution degree of each subsequent trigger operation.

In yet some embodiments, the updated prompt information 230 may indicate a ranking change of the livestream in the interaction event. For example, in response to the ranking of the livestream in the interaction event having changed due to the user's trigger operation for the virtual resource 215-1, the terminal device 110 may display the prompt information 230 as shown in Fig. 2C to indicate the ranking change of the livestream.

In other embodiments, the updated prompt information 230 may indicate a cumulative contribution degree of the received trigger operation. For example, in response to no additional trigger operation being received for a period of time, the terminal device 110 may display the cumulative contribution degree of all received trigger operations, for example, the interaction value of the cumulative contribution.

In yet some embodiments, the updated prompt information 230 may further indicate other important nodes in the interaction event, for example, the livestream enters the "promotion zone", and so on.

In some embodiments, another trigger operation received within a preset period of time after one trigger operation may be identified as a continuous trigger operation. For example, the user may achieve a "continuous giving" of virtual resources by continuously clicking on the trigger control 225.

Further, the terminal device 110 may display the number 235 of received trigger operations, for example. For example, the number 235 may represent the number of virtual resources "continuously given" by the user.

In yet some embodiments, the terminal device 110 may also update the display style of the trigger control 225 based on the frequency of the received at least one additional trigger operation. For example, the color of the trigger control 225 may change based on the frequency at which the trigger control 225 is pressed. When the user presses the trigger control 225 quickly and continuously, the trigger control 225 may have, for example, a more eye-catching color style. On the contrary, when the trigger control 225 has not been triggered for a period of time, it may have a less prominent color style.

In yet some embodiments, after the trigger control 225 has not been interacted with for a predetermined duration, the terminal device 110 may stop displaying the trigger control 225, the prompt information 230, and/or the dynamic effect 220. That is, the user will exit the continuous trigger state of the virtual resource.

Although the trigger operation for the virtual resource is described above in combination with the resource panel 210, in some embodiments, the terminal device 110 may also provide a dedicated trigger control in the live streaming interface, for example, without the user having to select a specific virtual resource. For example, the terminal device 110 may provide the trigger control 225 by default, and may receive the trigger operation for the target virtual resource through the trigger control 225.

Based on the interaction process described above, the embodiments of the present disclosure may provide the user with feedback on the continuous triggering of the virtual resource, thereby helping the user more intuitively perceive the contribution degree of the user's interaction operation to the livestream in the interaction event.

### Example Process

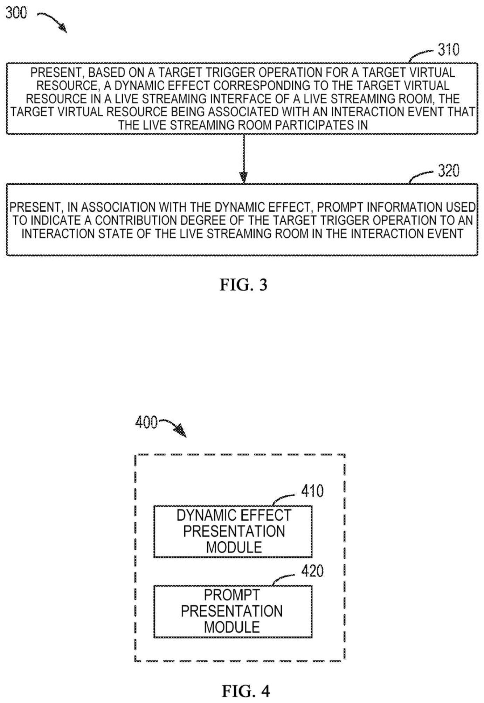

Fig. 3 shows a flowchart of an example process 300 for live streaming interaction according to some embodiments of the present disclosure. The process 300 may be implemented at the terminal device 110 associated with a user (for example, a streamer, a user or audience participating in a live streaming event) in a livestream. The process 300 is described below with reference to Fig. 1.

As shown in Fig. 3, at a block 310, the terminal device 110 presents, based on a target trigger operation for a target virtual resource, a dynamic effect corresponding to the target virtual resource in a live streaming interface of a livestream, the target virtual resource being associated with an interaction event that the livestream participates in.

At a block 320, the terminal device 110 presents, in association with the dynamic effect, prompt information used to indicate a contribution degree of the target trigger operation to an interaction state of the livestream in the interaction event.

In some embodiments, the process 300 further includes: presenting a trigger control in association with the dynamic effect; receiving, via the trigger control, at least one additional trigger operation for the target virtual resource; and updating the prompt information based on a contribution degree of the at least one additional trigger operation to the interaction state.

In some embodiments, the trigger control further displays the number of trigger operations already received.

In some embodiments, the updated prompt information indicates at least one of the following: a contribution degree corresponding to the at least one additional trigger operation; a ranking change of the livestream in the interaction event; a cumulative contribution degree of received trigger operation.

In some embodiments, the process 300 further includes: updating a display style of the trigger control based on a frequency of the received at least one additional trigger operation.

In some embodiments, the process 300 further includes: presenting, in the live streaming interface, a resource panel displaying a set of virtual resources associated with the interaction event; and receiving, via the resource panel, the target trigger operation for the target virtual resource in the set of virtual resources.

In some embodiments, the resource panel further includes a target region used to indicate a state of the livestream in the interaction event.

In some embodiments, the target region displays at least one of the following: an interaction value required for the livestream to become a winner of the interaction event; an interaction value gap between the livestream and a further livestream participating in the interaction event.

In some embodiments, the process 300 further includes: displaying in the target region, in response to a preset operation for at least one virtual resource in the set of virtual resources, an expected contribution degree of the at least one virtual resource to the interaction state.

In some embodiments, the target region further displays an access entry for accessing a viewing page of the interaction event.

In some embodiments, presenting resource panel in the live streaming interface includes: presenting a viewing interface of the interaction event; and presenting the resource panel in the live streaming interface based on a preset operation for an interaction entry in the viewing interface.

### Example Apparatus and Device

The embodiments of the present disclosure further provide corresponding apparatuses for implementing the above methods or processes. Fig. 4 shows a schematic structural block diagram of an apparatus 400 for live streaming interaction according to some embodiments of the present disclosure. The apparatus 400 may be implemented as or included in the terminal device 110. Respective modules/components in the apparatus 400 may be implemented by hardware, software, firmware, or any combination thereof.

As shown in Fig. 4, the apparatus 400 includes: a dynamic effect presentation module 410 configured to present, based on a target trigger operation for a target virtual resource, a dynamic effect corresponding to the target virtual resource in a live streaming interface of a livestream, the target virtual resource being associated with an interaction event that the livestream participates in; and a prompt presentation module 420 configured to present, in association with the dynamic effect, prompt information used to indicate a contribution degree of the target trigger operation to an interaction state of the livestream in the interaction event.

In some embodiments, the apparatus 400 further includes an information update module configured to: present a trigger control in association with the dynamic effect; receive, via the trigger control, at least one additional trigger operation for the target virtual resource; and update the prompt information based on a contribution degree of the at least one additional trigger operation to the livestream in the interaction state.

In some embodiments, the trigger control further displays the number of trigger operations already received.

In some embodiments, the updated prompt information indicates at least one of the following: a contribution degree corresponding to the at least one additional trigger operation; a ranking change of the livestream in the interaction event; a cumulative contribution degree of received trigger operation.

In some embodiments, the apparatus 400 further includes a style update module configured to: update a display style of the trigger control based on a frequency of the received at least one additional trigger operation.

In some embodiments, the apparatus 400 further includes a panel presentation module configured to: present, in the live streaming interface, a resource panel displaying a set of virtual resources associated with the interaction event; and receive, via the resource panel, the target trigger operation for the target virtual resource in the set of virtual resources.

In some embodiments, the resource panel further includes a target region used to indicate a state of the livestream in the interaction event.

In some embodiments, the target region displays at least one of the following: an interaction value required for the livestream to become a winner of the interaction event; an interaction value gap between the livestream and a further livestream participating in the interaction event.

In some embodiments, the apparatus 400 further includes a preview module configured to: display in the target region, in response to a preset operation for at least one virtual resource in the set of virtual resources, an expected contribution degree of the at least one virtual resource to the livestream in the interaction state.

In some embodiments, the target region further displays an access entry for accessing a viewing page of the interaction event.

In some embodiments, the panel presentation module is further configured to: present a viewing interface of the interaction event; and present the resource panel in the live streaming interface based on a preset operation for an interaction entry in the viewing interface.

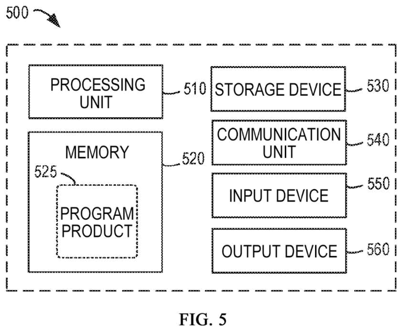

Fig. 5 shows a block diagram of an electronic device 500 in which one or more embodiments of the present disclosure may be implemented. It should be understood that the electronic device 500 shown in Fig. 5 is only illustrative and should not constitute any limitation on the functions and scope of the embodiments described herein. The electronic device 500 shown in Fig. 5 may be used to implement the terminal device 110 of Fig. 1.

As shown in Fig. 5, the electronic device 500 is in the form of a general-purpose electronic device. The components of the electronic device 500 may include but are not limited to one or more processors or a processing unit 510, a memory 520, a storage device 530, one or more communication units 540, one or more input devices 550, and one or more output devices 560. The processing unit 510 may be an actual or virtual processor and may execute various processes according to the programs stored in the memory 520. In a multiprocessor system, multiple processing units execute computer executable instructions in parallel to improve the parallel processing capability of the electronic device 500.

The electronic device 500 typically includes multiple computer storage mediums. Such mediums may be any available mediums that are accessible to the electronic device 500, including but not limited to volatile and non-volatile mediums, and removable and non-removable mediums. The memory 520 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 530 may be any removable or non-removable medium, and may include a machine-readable medium such as a flash drive, a disk, or any other medium, which may be used to store information and/or data and may be accessed within the electronic device 500.

The electronic device 500 may further include additional removable/non-removable, volatile/non-volatile memory medium. Although not shown in Fig. 5, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 520 may include a computer program product 525, which has one or more program modules configured to perform various methods or actions of the various embodiments of the present disclosure.

The communication unit 540 enables communication with other electronic devices through the communication medium. Additionally, the functions of the components of the electronic device 500 may be implemented by a single computing cluster or multiple computing machines, which may communicate through a communication connection. Therefore, the electronic device 500 may use a logical connection with one or more other servers, a network personal computer (PC) or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) through the communication unit 540 as needed, the external devices such as a storage device, a display device, etc., communicate with one or more devices that enable the user to interact with the electronic device 500, or communicate with any devices (for example, a network card, a modem, etc.) that enable the electronic device 500 to communicate with one or more other electronic devices. Such communication may be performed via input/output (I/O) interfaces (not shown).

According to an example implementation of the present disclosure, a computer-readable storage medium is provided, having computer-executable instructions stored thereon, where the computer-executable instructions are executed by the processor to implement the method described above. According to an example implementation of the present disclosure, a computer program product is further provided, the computer program product being tangibly stored on a non-transitory computer-readable medium and including computer-executable instructions, and the computer-executable instructions being executed by the processor to implement the method described above.

Various aspects of the present disclosure are described herein with reference to the flowcharts and/or block diagrams of the method, the apparatus, the device, and the computer program product implemented according to the present disclosure. It should be understood that each block of the flowcharts and/or block diagrams, and the combination of respective blocks in the flowcharts and/or block diagrams may be implemented by computer-readable program instructions.

These computer-readable program instructions may be provided to the processing unit of a general-purpose computer, a special-purpose computer, or other programmable data processing apparatus, so as to produce a machine, such that these instructions, when executed by the processing unit of the computer or other programmable data processing apparatus, produce an apparatus for implementing the functions/actions specified in one or more blocks in the flowcharts and/or block diagrams. These computer-readable program instructions may also be stored in a computer-readable storage medium, these instructions make the computer, the programmable data processing apparatus, and/or other devices work in a specific manner, and thus, the computer-readable medium storing the instructions includes a manufactured product, which includes instructions for implementing various aspects of the functions/actions specified in one or more blocks in the flowcharts and/or block diagrams.

The computer-readable program instructions may be loaded onto a computer, other programmable data processing apparatus, or other devices, so that a series of operation steps are executed on the computer, the other programmable data processing apparatus, or the other devices to produce a computer-implemented process, so that the instructions executed on the computer, the other programmable data processing apparatus, or the other devices implement the functions/actions specified in one or more blocks in the flowcharts and/or block diagrams.

The flowcharts and block diagrams in the drawings show the possibly implemented architectures, functions, and operations of the system, the method, and the computer program product according to multiple implementations of the present disclosure. In this regard, each block in the flowchart or block diagram may represent a module, program segment, or part of an instruction, and the module, program segment, or part of the instruction contains one or more executable instructions for implementing the specified logical functions. In some alternative implementations, the functions marked in the blocks may also occur in an order different from that marked in the drawings. For example, two consecutive blocks may actually be executed substantially in parallel, or they may sometimes be executed in the reverse order, depending on the functions involved. It should also be noted that each block in the block diagrams and/or flowcharts, and the combination of the blocks in the block diagrams and/or flowcharts may be implemented by a special-purpose hardware-based system that executes specified functions or actions, or by a combination of special-purpose hardware and computer instructions.

The implementations of the present disclosure have been described above, and the above description is illustrative, non-exhaustive, and not limited to the disclosed implementations. Without departing from the scope and spirit of the illustrated implementations, many modifications and changes will be apparent to those of ordinary skill in the art. The terms used herein are intended to best explain the principles, practical applications, or improvements of the technology in the market of respective implementations, or to enable other ordinary skilled persons in the art to understand respective implementations disclosed herein.

## Claims

1. A method for live streaming interaction, comprising:
presenting, based on a target trigger operation for a target virtual resource, a dynamic effect corresponding to the target virtual resource in a live streaming interface of a livestream, the target virtual resource being associated with an interaction event that the livestream participates in; and
presenting, in association with the dynamic effect, prompt information used to indicate a contribution degree of the target trigger operation to an interaction state of the livestream in the interaction event.

2. The method of claim 1, further comprising:
presenting a trigger control in association with the dynamic effect;
receiving, via the trigger control, at least one additional trigger operation for the target virtual resource; and
updating the prompt information based on a contribution degree of the at least one additional trigger operation to the interaction state.

3. The method of claim 2, wherein the trigger control further displays the number of trigger operations already received.

4. The method of claim 2, wherein the updated prompt information indicates at least one of the following:
a contribution degree corresponding to the at least one additional trigger operation;
a ranking change of the livestream in the interaction event;
a cumulative contribution degree of received trigger operation.

5. The method of claim 2, further comprising:
updating a display style of the trigger control based on a frequency of the received at least one additional trigger operation.

6. The method of claim 1, further comprising:
presenting, in the live streaming interface, a resource panel displaying a set of virtual resources associated with the interaction event; and
receiving, via the resource panel, the target trigger operation for the target virtual resource in the set of virtual resources.

7. The method of claim 6, wherein the resource panel further comprises a target region used to indicate a state of the livestream in the interaction event.

8. The method of claim 7, wherein the target region displays at least one of the following:
an interaction value required for the livestream to become a winner of the interaction event;
an interaction value gap between the livestream and a further livestream participating in the interaction event.

9. The method of claim 7, further comprising:
displaying in the target region, in response to a preset operation for at least one virtual resource in the set of virtual resources, an expected contribution degree of the at least one virtual resource to the interaction state.

10. The method of claim 7, wherein the target region further displays an access entry for accessing a viewing page of the interaction event.

11. The method of claim 6, wherein presenting resource panel in the live streaming interface comprises:
presenting a viewing interface of the interaction event; and
presenting the resource panel in the live streaming interface based on a preset operation for an interaction entry in the viewing interface.

12. An apparatus for live streaming interaction, comprising:
a dynamic effect presentation module configured to present, based on a target trigger operation for a target virtual resource, a dynamic effect corresponding to the target virtual resource in a live streaming interface of a livestream, the target virtual resource being associated with an interaction event that the livestream participates in; and
a prompt presentation module configured to present, in association with the dynamic effect, prompt information used to indicate a contribution degree of the target trigger operation to an interaction state of the livestream in the interaction event.

13. An electronic device, comprising:
at least one processing unit; and
at least one memory, the at least one memory being coupled to the at least one processing unit and storing instructions executable by the at least one processing unit, the instructions, when executed by the at least one processing unit, causing the electronic device to perform the method of any of claims 1 to 11.

14. A computer-readable storage medium having a computer program stored thereon, the computer program being executable by a processor to implement the method of any of claims 1 to 11.
